# EUROPEAN PATENT APPLICATION

(11) **EP 3 466 554 A1**
(43) Date of publication of application: **10.04.2019**
(21) Application number: 18179670.7
(22) Date of filing: 25.06.2018
(51) Int. Cl.: B08B 5/02, B08B 5/04, B23Q 11/00

(54) **CLEANING APPARATUS AND CLEANING METHOD**

(30) Priority: 03.10.2017 JP 2017193693
(71) Applicant: Sugino Machine Limited, Uozu city Toyama 937-8511 (JP)
(72) Inventor: MITSUE, Toyoaki, Uozu City, Toyama 9378511 (JP); SAWASAKI, Tomio, Uozu City, Toyama 9378511 (JP); KANAYAMA, Chieko, Uozu City, Toyama 9378511 (JP)
(74) Representative: Global IP Europe Patentanwaltskanzlei

(57) **Abstract**

A cleaning apparatus removes foreign objects adhering to the inner surface of a hole in a machine component, such as an internal thread. The cleaning apparatus includes a suction pipe (38) including a suction port (33) at its distal end, a suction nose (32) located at the distal end of the suction pipe (38) for holding the suction port (33) in a manner retractable along an axis of the suction pipe (38), an exhauster (25) connected to the suction pipe (38), and a lance (34) having a distal end extendable along the axis of the suction pipe (38) inside the suction pipe (38), and having an orifice (341).

## Description

### BACKGROUND

### 1. Technical Field

The present invention relates to a cleaning apparatus and a cleaning method.

### 2. Description of the Background

A known component cleaning apparatus includes a suction unit containing a jet nozzle, which jets compressed air to a circuit component to blow off dust adhering to the circuit component while a vacuum pump sucks air inside the suction unit (refer to Japanese Unexamined Patent Application Publication No. H5-57257 or Patent Literature 1).

### BRIEF SUMMARY

The component cleaning apparatus described in Patent Literature 1 may not remove foreign objects adhering to the inner surface of a hole in a machine component, such as an internal thread.

One or more aspects of the present invention are directed to a cleaning apparatus that removes foreign objects adhering to the inner surface of a hole in a machine component, such as an internal thread.

A first aspect of the present invention provides a cleaning apparatus, including:
a suction pipe including a suction port at a distal end thereof;
a suction nose located at the distal end of the suction pipe, the suction nose holding the suction port in a manner retractable along an axis of the suction pipe;
an exhauster connected to the suction pipe; and
a lance having a distal end extendable along the axis of the suction pipe inside the suction pipe, the lance having an orifice.

A second aspect of the present invention provides a method for cleaning a target, including:
placing a suction port in close contact with a cleaning spot of a target;
sucking through the suction port;
inserting a lance into the cleaning spot;
jetting compressed air from the lance;
stopping jetting of compressed air from the lance;
stopping sucking through the suction port; and
moving the suction port away from the cleaning spot.

The apparatus and the method according to the aspects of the present invention remove foreign objects adhering to the inner surface of a hole in a machine component, such as an internal thread.

### BRIEF DESCRIPTION OF DRAWINGS

Fig. 1 is a schematic diagram of a cleaning apparatus showing its overall structure according to one embodiment.
Fig. 2 is an enlarged sectional view of a nozzle according to the embodiment.
Fig. 3 is an enlarged sectional view of a main part of a nozzle according a modification.
Fig. 4 is an enlarged sectional view of a main part of a nozzle according to another modification.
Fig. 5 is an enlarged perspective view of a sealing device according to the embodiment.
Fig. 6 is a flowchart of a cleaning method according to one embodiment.
Fig. 7 is a perspective view of a workpiece being cleaned in the embodiment.
Fig. 8A is a partial sectional view of the nozzle describing insertion of a lance in the embodiment.
Fig. 8B is a partial sectional view of the nozzle describing insertion of the lance in the embodiment.

### DETAILED DESCRIPTION

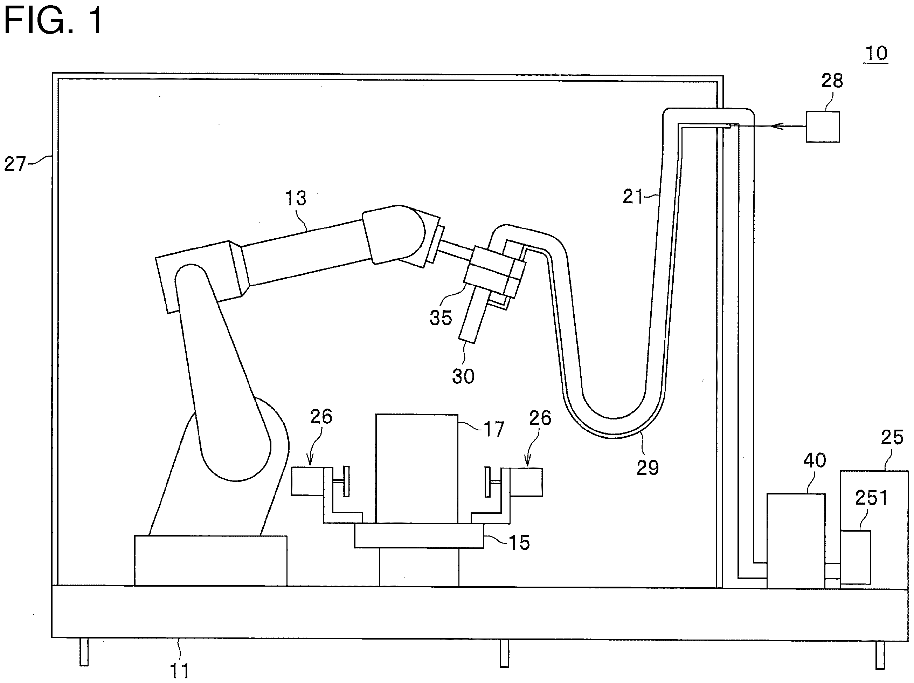

A cleaning apparatus 10 according to one embodiment will now be described with reference to the drawings. As shown in Fig. 1, the cleaning apparatus 10 includes a base 11, an arm 13, a mount 15, a nozzle 30, a suction duct (suction channel) 21, a filter 40, an exhauster 25, and a safety fence 27. The cleaning apparatus 10 may further include sealing devices 26.

The base 11 is a frame. The base 11 may include a drain pan on its lower surface.

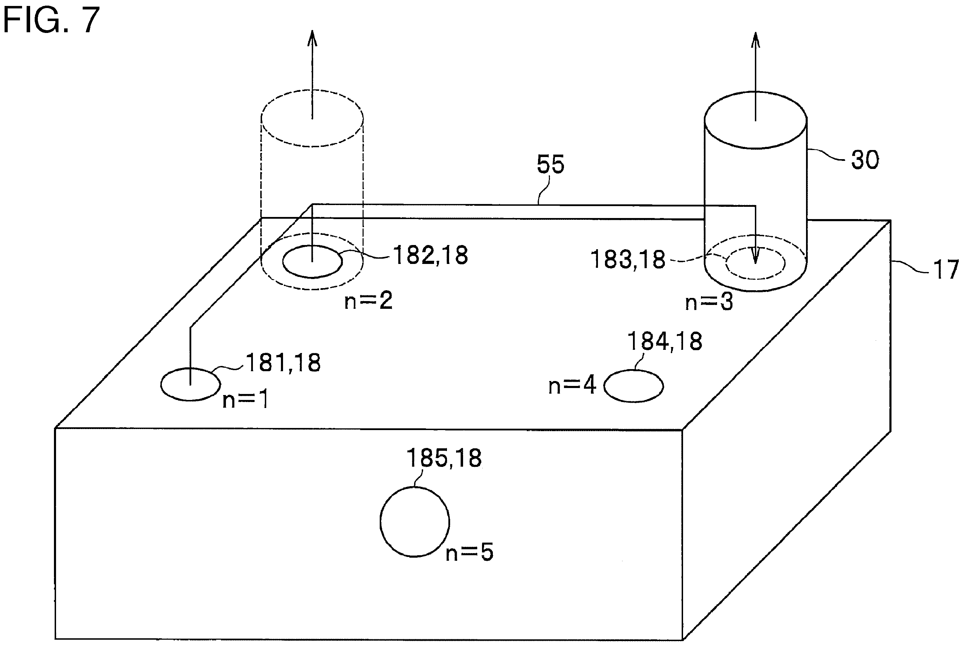

The arm 13 is located on the upper surface of the base 11. The arm 13 is a robot, such as a vertically articulated robot, an orthogonal robot, or a parallel link robot. The arm 13 includes the nozzle 30 at its distal end. The arm 13 places the nozzle 30 in close contact with cleaning spots 18 (collectively for cleaning spots 181 to 185 in Fig. 7) of a workpiece 17.

The mount 15 is located on the upper surface of the base 11. The mount 15 receives the workpiece 17.

The safety fence 27 covers the base 11. The safety fence 27 has a door (not shown) for an inspector to enter.

The suction duct (suction channel) 21 connects the nozzle 30 to the filter 40. The suction duct 21 is suspended between the nozzle 30 and a position near the ceiling of the safety fence 27. The suction duct 21 is, for example, a flexible duct hose. The suction duct 21 may be contained in a cable protection pipe. The suction duct 21 may be formed from a conductive material and grounded. A heater may be arranged around the outer peripheral surface of the suction duct 21.

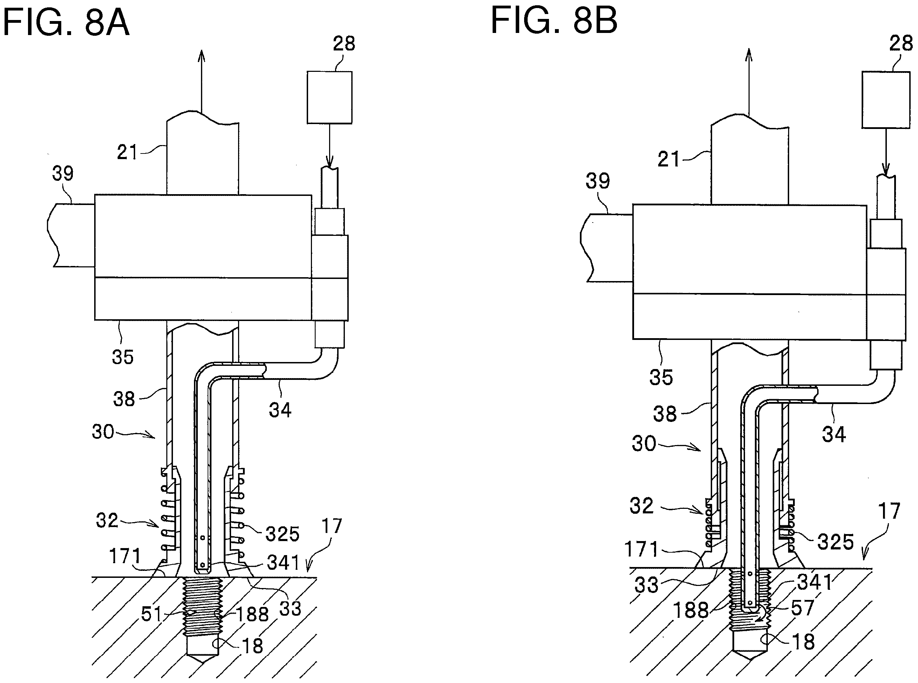

The grounded conductive suction duct 21 prevents a foreign object 51 (refer to Figs. 8A and 8B) passing through and sliding along the suction duct 21 from being electrically charged and adhering to the suction duct 21. An external heater heats the suction duct 21 to prevent water contained in sucked air from condensing and adhering to the inner surface of the suction duct 21.

The foreign object 51 refers to any substance adhering to and remaining on the workpiece 17, such as chips or lint.

The suction duct 21 may extend along the arm 13 instead of being suspended from near the ceiling.

The exhauster 25 is a vacuum pump, such as a dry rotary vane vacuum pump, a dry scroll vacuum pump, or an oil rotary vacuum pump. The exhauster 25 may include an exhaust valve 251. When the exhauster 25 is activated and the exhaust valve 251 is open, the exhauster 25 starts sucking the foreign object 51 or other substances through the suction port along the suction duct 21. The exhaust valve 251 eliminates repeated activation and deactivation of the exhauster 25 and thus shortens the cleaning time.

The filter 40 captures the sucked foreign object 51. The filter 40 may capture oil and water. The filter 40 may be an industrial filter, such as a cartridge filter, a bag filter, or a cyclone. The filter 40 may include a cold trap.

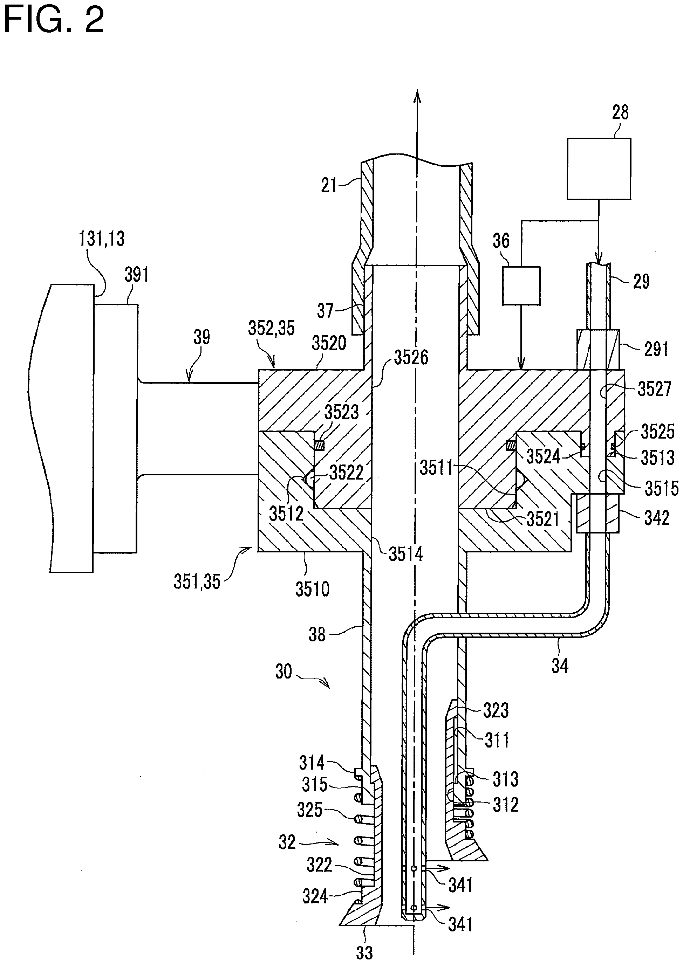

The nozzle 30 will now be described with reference to Fig. 2. The nozzle 30 includes a support rod 39, a suction pipe 38, a suction nose 32, and a suction port 33. Fig. 2 shows the suction nose 32 being contracted in the right half, and being extended in the left half.

The support rod 39 includes a flange 391. The flange 391 is fixed to a mount surface 131 of the arm 13. The support rod 39 supports the suction pipe 38.

The suction port 33 is circular, rectangular, or specifically shaped in conformance to the shape of the cleaning spot 18 (refer to Fig. 7). The suction port 33 is slightly larger than the cleaning spot 18. For example, for the cleaning spot 18 including an internal thread of the normal size of M6, the suction port 33 is circular and has an inner diameter (or a diameter) of 7 to 9 mm. The material defining the suction port 33 is selectable from materials soft enough not to damage the workpiece 17 when in contact with the workpiece 17. For an aluminum workpiece 17, the material defining the suction port 33 is selectable from conductive plastic and conductive rubber.

The suction pipe 38 is hollow and cylindrical. The suction pipe 38 has a suction channel connection port 37 at its basal end. The suction duct 21 is connected to the suction channel connection port 37. The exhauster 25 is connected to the suction pipe 38 with the suction duct 21, and releases air sucked through the suction port 33 to outside. The foreign object 51 sucked through the suction port 33 is captured on the filter 40.

The suction nose 32 is located at the distal end of the suction pipe 38. The suction nose 32 has the suction port 33 on its distal end. The suction nose 32 holds the suction port 33 in a manner retractable along the axis of the suction pipe 38.

The suction nose 32 includes a guide tube 322, a slide guide 323, a suction nose spring guide 324, and an elastic helical spring 325. The guide tube 322 is slidably inserted into the suction pipe 38. The guide tube 322 is hollow and cylindrical, and has its outer peripheral surface slidable on a slide surface 312. The guide tube 322 has the slide guide 323 at its basal end, and a suction port 33 at its distal end. The suction pipe 38 has cylindrical slide surfaces 311 and 312 at the inner peripheral surface of its distal end. The slide surface 312 is radially smaller than the slide surface 311, and is located nearer the distal end of the suction pipe 38 than the slide surface 311. The slide surface 311 and the slide surface 312 together define a step 313, which functions as a stopper for preventing the guide tube 322 from slipping off. The slide guide 323 is radially larger than the guide tube 322. The helical spring 325 is located at the outer peripheral surface of the guide tube 322. The suction pipe 38 includes a ring 314 located at a basal end of the suction pipe spring guide 315 and holding an end of the helical spring 325. The guide tube 322 includes the suction nose spring guide 324 along the axis of the suction pipe 38 at the outer surface of its distal end. The suction nose spring guide 324 guides the inner peripheral surface of the helical spring 325. The suction nose spring guide 324 has an outer diameter slightly smaller than the inner diameter of the helical spring 325. The suction nose spring guide 324 includes a spring receiver near its distal end, which receives the distal end of the helical spring 325. The suction pipe 38 includes a suction pipe spring guide 315 at the outer surface of its distal end, which guides the inner peripheral surface of the helical spring 325. The helical spring 325, which is supported by the suction pipe spring guide 315 and the suction nose spring guide 324, extends between the ring 314 and the suction port 33. The ring 314 is located near the basal end of the suction pipe spring guide 315, and holds the basal end of the helical spring 325. The helical spring 325 urges the suction nose 32 in a direction in which the suction port 33 moves away from the suction pipe 38, or in the distal end direction. The suction nose 32 slides in the suction pipe 38 while the guide tube 322 and the slide guide 323 slide along the slide surfaces 311 and 312. The helical spring 325 may be replaced by another elastic member, such as a disc spring, a leaf spring, or a rubber tube.

The cleaning apparatus 10 further includes a lance 34, a compressed air feeder 28, and an air tube (compressed air feeding pipe) 29.

The lance 34 is installed in the nozzle 30. The lance 34 is inserted from outside the suction pipe 38 into the suction pipe 38. The lance 34 has its distal end extendable in the direction in which the suction port 33 is retractable, or in other words concentrically with the suction pipe 38. When the suction nose 32 is extended, the distal end of the lance 34 is adjacent to the suction port 33. The distal end of the lance 34 is closed. The lance 34 has one or more orifices 341 in the peripheral surface of the distal end. The lance 34 may have multiple orifices 341 radially at circumferentially equal intervals in the peripheral surface of the distal end. The lance 34 may have multiple orifices 341 in its axial direction. For example, the lance 34 may have eight orifices 341, or four arranged in the circumferential direction and two arranged in the axial direction as shown in the figures.

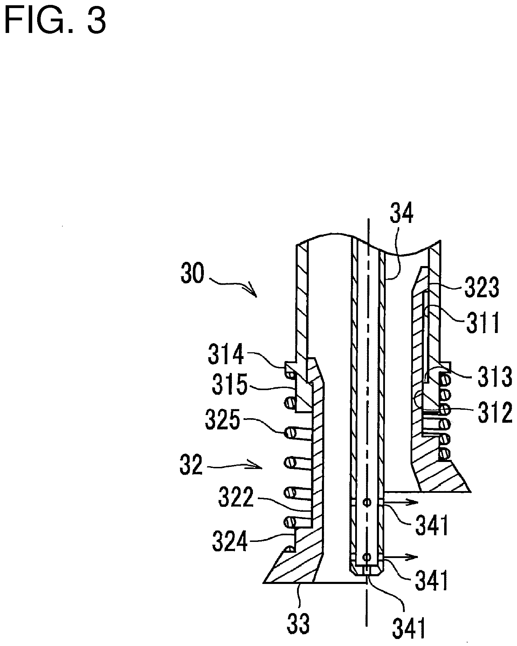

When the cleaning spot 18 as a main cleaning target is a surface, the lance 34 may have orifices 341 in the axial direction in its distal end as shown in Fig. 3 in place of or in addition to the orifices 341 arranged in the circumferential direction. In this case, the distal end of the lance 34 is located slightly inward from the suction port 33 without protruding outward from the suction port 33 when the suction nose 32 is extended. This structure facilitates removal of the foreign object 51 on the bottom of a deep blind hole or a deep blind internal thread.

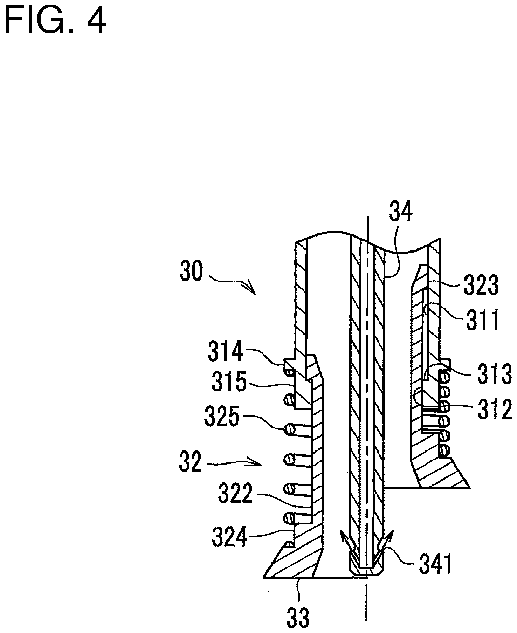

As shown in Fig. 4, the lance 34 may have, in its distal end, orifices 341 obliquely extending toward its basal end along the axis of the lance 34. This structure facilitates efficient cleaning of a through-hole.

With reference to Fig. 2, the compressed air feeder 28 may include an air compressor and an air on-off valve.

The air tube 29 connects the compressed air feeder 28 to the lance 34. The air tube 29 may be flexible. The air tube 29 may extend along the suction duct 21.

The cleaning apparatus 10 may include a nozzle exchanger 35 and an electromagnetic valve 36. The nozzle exchanger 35 includes a master cylinder 352 and an adapter 351. The master cylinder 352 is fixed to the support rod 39. The suction channel connection port 37 is located at the basal end of the master cylinder 352. The suction pipe 38 is located at the distal end of the adapter 351. The adapter 351 is removable from the master cylinder 352. The adapter 351 may be detached from the master cylinder 352 to allow mounting of an appropriate nozzle 30 onto the arm 13 in conformance to the shape of the cleaning spot 18.

The master cylinder 352 includes a body 3520, a main protrusion 3521, a suction channel 3526, an air channel 3527, plungers 3522, a packing 3523, a sub-protrusion 3524, and a packing 3525. The body 3520 is cylindrical. The body 3520 has a cylindrical main protrusion 3521 at its center. The main protrusion 3521 has the suction channel 3526 extending through its center. The main protrusion 3521 includes multiple plungers 3522 radially extending in its vertically center portion. The packing 3523 is located at the outer peripheral surface of the main protrusion 3521. The body 3520 includes the cylindrical sub-protrusion 3524 parallel to the main protrusion 3521 near its peripheral surface. The packing 3525 is located at the outer peripheral surface of the sub-protrusion 3524. The sub-protrusion 3524 has the air channel 3527 extending through its center. In some embodiments, a suction channel 3514, the suction channel 3526, and the suction pipe 38 have an identical inner diameter and are coaxial. The air tube 29 is connected to the air channel 3527 with a joint 291.

The adapter 351 includes a body 3510, a main recess 3511, a suction channel 3514, a V-groove 3512, a sub-recess 3513, and an air channel 3515. The body 3510 is cylindrical. The body 3510 has the main recess 3511 at its center. The main recess 3511 is a cylindrical blind hole. The main recess 3511 receives the main protrusion 3521 fit in it. The main recess 3511 has the suction channel 3514 extending through its center. The suction channel 3514 is connected to the suction pipe 38. The main recess 3511 has the V-groove 3512 with a V-shaped cross-section in its vertically center portion. The V-groove 3512 extends circumferentially. The body 3510 has the sub-recess 3513 parallel to the main recess 3511 near its peripheral surface. The sub-recess 3513 is a cylindrical blind hole, which is radially smaller than the main recess 3511. The sub-recess 3513 receives the sub-protrusion 3524 fit in it. The sub-recess 3513 has the air channel 3515 extending through its center. The lance 34 is connected to the air channel 3515 with a joint 342.

When the adapter 351 is attached to the master cylinder 352, the main protrusion 3521 and the sub-protrusion 3524 are respectively received in the main recess 3511 and the sub-recess 3513, and the plungers 3522 protrude into the V-groove 3512. This fixes the adapter 351 to the master cylinder 352. The suction channel 3514 and the suction channel 3526 are hermetically sealed with the packing 3523. The air channel 3515 and the air channel 3527 are hermetically sealed with the packing 3525.

The electromagnetic valve 36 is located between the compressed air feeder 28 and the master cylinder 352. The electromagnetic valve 36 is a directional control valve. When the electromagnetic valve 36 is switched to the connection mode, the compressed air fed from the compressed air feeder 28 through the channel (not shown) within the master cylinder 352 pushes the plungers 3522 outward, causing the ends of the plungers 3522 to protrude into the V-groove 3512. This connects the adapter 351 to the master cylinder 352. When the electromagnetic valve 36 is switched to the disconnection mode, the ends of the plungers 3522 are pulled inward by the urging force of a spring (not shown). This disconnects the adapter 351 from the master cylinder 352.

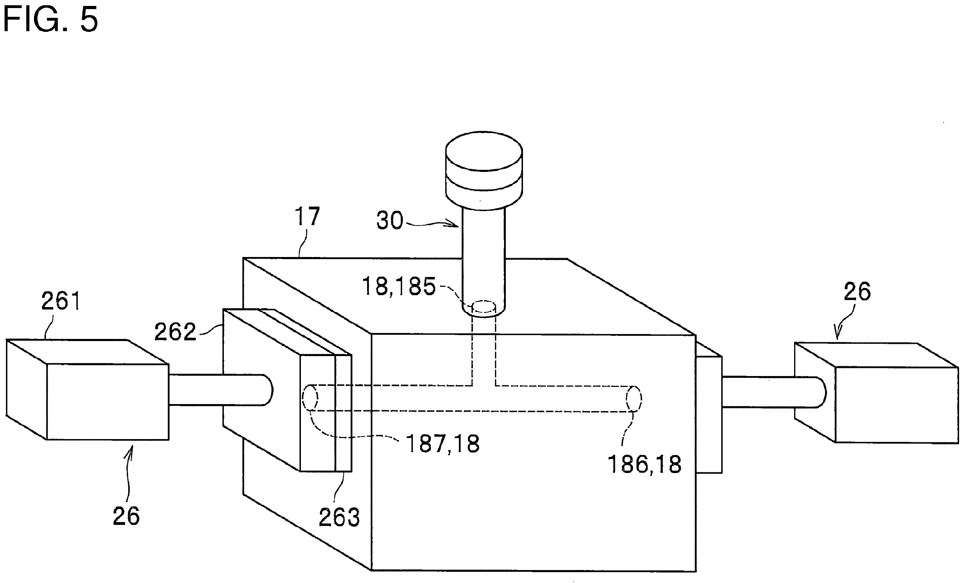

The sealing devices 26 will now be described with reference to Fig. 5. When the cleaning spot 185 is one of the openings of a cross-hole, the sealing devices 26 seal openings 186 and 187 other than the cleaning spot 185 to which the nozzle 30 is in close contact. Each sealing device 26 includes a cylinder 261, a support plate 262, and a sealer 263. The cylinder 261 is a fluid cylinder, such as an air cylinder. The support plate 262 is moved by the cylinder 261. For example, the support plate 262 is fixed to the cylinder rod of the cylinder 261. When the cylinder rod is extended, the sealer 263 is pressed against the workpiece 17. When the cylinder rod is contracted, the sealer 263 separates from the workpiece 17, and moves to its retracted position. The sealers 263 seal the openings 186 and 187. The sealers 263 are, for example, rubber plates or O-rings. Each sealer 263 is supported by the corresponding support plate 262. When the nozzle 30 is in close contact with the cleaning spot 185, the sealing devices 26 seal the openings 186 and 187 other than the cleaning spot 185. After the suction at the cleaning spot 185 is complete, the sealing devices 26 retract the sealers 263 to unseal the openings 186 and 187.

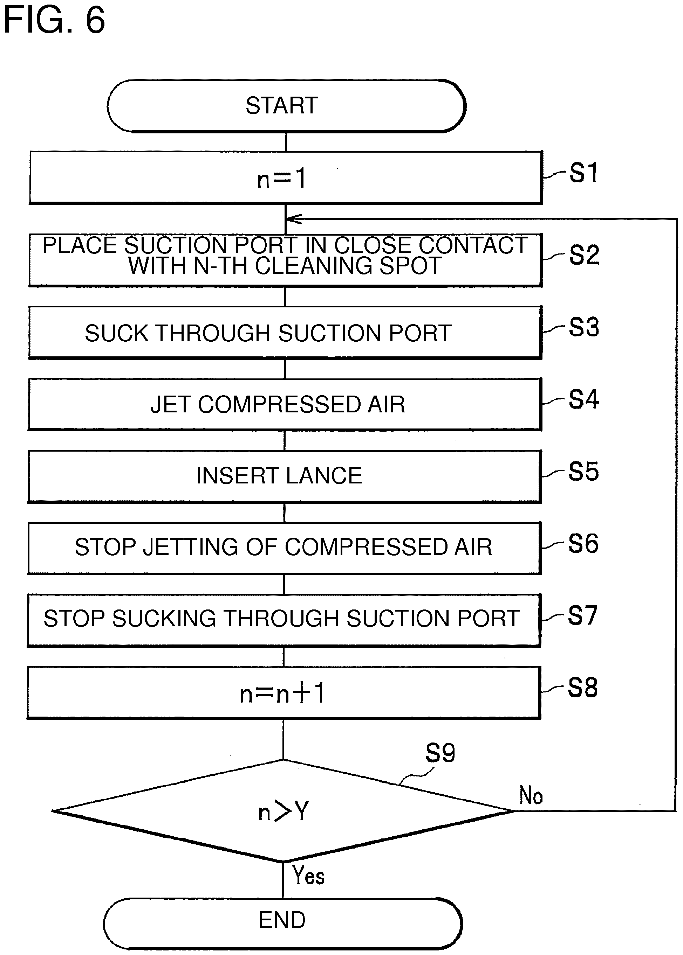

A cleaning method according to one embodiment will now be described with reference to Fig. 6. The arm 13 places the suction port 33 in close contact with a first cleaning spot 18 (S2). The exhaust valve 251 is opened to allow suction through the suction port 33 (S3). The lance 34 jets compressed air (S4). The lance 34 is inserted into the cleaning spot 18 (S5). The lance 34 stops jetting the compressed air (S6). The exhaust valve 251 is closed to stop sucking (S7). The processing in steps S2 to S7 is repeated for each cleaning spot (S1, S8, and S9).

Each step will now be described in detail.

For ease of explanation, the processing in steps S1, S8, and S9 represents a simple iterative operation in Fig. 6. In an actual operation shown in Fig. 7 in which the processing in steps S1 to S9 is performed, a numerical controller controls the arm 13, the filter 40, and the exhauster 25 in the order defined in a numerical control program stored in a coordinate value storage unit. As shown in Fig. 7, the arm 13 moves along a programmed route 55, and places the nozzle 30 in close contact with the cleaning spots 181 to 185 of the workpiece 17 sequentially to insert the lance 34 (refer to Fig. 2).

The processing in steps S2 to S7 will now be described with reference to Figs. 8A and 8B. The arm 13 first moves the suction port 33 toward and substantially perpendicularly to the workpiece surface 171 at the cleaning spot 18. The arm 13 then places the suction port 33 in close contact with the cleaning spot 18 as shown in Fig. 8A (S2). The suction nose 32, which retractably holds the suction port 33, and the helical spring 325, which urges the suction port 33 toward the cleaning spot 18, together allow the suction port 33 to be in close contact with the cleaning spot 18. Subsequently, the numerical controller activates the exhauster 25 and opens the exhaust valve 251 to evacuate the cleaning spot 18, the suction pipe 38, and the suction duct 21 (S3). The numerical controller then feeds compressed air from the compressed air feeder 28. The compressed air travels along the nozzle exchanger 35 and the lance 34, and is jetted through the orifices 341 (S4).

The arm 13 then further presses the nozzle 30 against the workpiece 17. This contracts the helical spring 325, causing the suction nose 32 to slide into the suction pipe 38. The lance 34 is thus inserted into the cleaning spot 18 as shown in Fig. 8B (S5). The jet of compressed air through the orifices 341 moves along a thread 188 into a swirl flow 57. The swirl flow 57 washes away the foreign object 51 on the thread 188, which is then sucked up through the suction port 33.

The lance 34 is inserted in the cleaning spot 18 to a depth that does not reach the bottom of the cleaning spot 18, and then is removed. After the lance 34 is removed, the suction port 33 remains in close contact with the cleaning spot 18. The lance 34 may be repeatedly inserted several times.

When the lance 34 is inserted, the orifices 341 face the thread 188. The compressed air jetted through the orifices 341 inserted in the cleaning spot 18 reaches the roots of the thread 188. The compressed air jetted through the orifices 341 turns into the swirl flow 57 to remove the foreign object 51 remaining at the screw valley of the thread 188. This efficiently blows off the foreign object 51 from the thread 188.

The foreign object 51 in the cleaning spot 18 is sucked through the suction port 33. The foreign object 51 blown off by the compressed air is also sucked through the suction port 33. The sucked foreign object 51 moves along the suction duct 21, and is then captured on the filter 40. The sucked air passes through the filter 40, and is released through the exhauster 25.

Subsequently, the numerical controller stops feeding the compressed air from the compressed air feeder 28 to stop jetting the compressed air (S6). The numerical controller then closes the exhaust valve 251 to stop sucking through the suction port 33 (S7). The exhauster 25 may be stopped in step S7.

For the cleaning apparatus 10 including the sealing devices 26, the sealing devices 26 seal the openings 186 and 187 before step S2. In this case, the sealing devices 26 unseal the openings 186 and 187 at the same time as or before or after step S7. The value Y in the flowchart represents the total number of cleaning spots 18.

The cleaning apparatus 10 including the suction nose 32 according to the present embodiment can have the lance 34 inserted in the cleaning spot 18 with the suction port 33 in close contact with the cleaning spot 18. This structure easily allows the compressed air jetted through the orifices 341 to reach a position deep in the cleaning spot 18.

The cleaning apparatus 10 can thus remove the foreign object 51 adhering to the inner surface of a hole in a machine component, such as an internal thread.

The present invention is not limited to the above-described embodiments, and various modifications are possible without departing from the gist of the present invention, and all technical matters included in the technical concept described in the claims are encompassed by the present invention. While specific embodiments have been described, those skilled in the art may practice various alternatives, modifications, alterations, or improvements from the disclosure described herein, and all such variations fall within the scope of the invention defined by the appended claims.

### Reference Signs List

- 10: cleaning apparatus
- 13: arm
- 17: workpiece
- 18, 181 to 185: cleaning spot
- 21: suction duct (suction channel)
- 25: exhauster
- 28: compressed air feeder
- 30: nozzle
- 32: suction nose
- 33: suction port
- 34: lance
- 38: suction pipe
- 40: filter
- 311, 312: slide surface
- 313: step (stopper)
- 314: ring
- 315: suction pipe spring guide
- 322: guide tube
- 324: suction nose spring guide
- 341: orifice

## Claims

1. A cleaning apparatus, comprising:
a suction pipe (38) including a suction port (33) at a distal end thereof;
a suction nose (32) located at the distal end of the suction pipe (38), the suction nose (32) holding the suction port (33) in a manner retractable along an axis of the suction pipe (38);
an exhauster (25) connected to the suction pipe (38); and
a lance (34) having a distal end extendable along the axis of the suction pipe (38) inside the suction pipe (38), the lance (34) having an orifice (341).

2. The cleaning apparatus according to claim 1, further comprising:
a compressed air feeder (28); and
an air channel (3515, 3527) connecting the lance (34) to the compressed air feeder (28).

3. The cleaning apparatus according to claim 1 or claim 2, wherein
the suction nose (32) includes
a guide tube (322) slidably insertable into the suction pipe (38), and
an elastic member (325) configured to urge the suction nose (32) in a direction in which the suction port (33) moves away from the suction pipe (38).

4. The cleaning apparatus according to any one of claims 1 to 3, wherein
the suction pipe (38) incudes
a slide surface (311, 312) on which an outer surface of the guide tube (322) is slidable, and
a stopper (313) configured to prevent the guide tube (322) from slipping off.

5. The cleaning apparatus according to any one of claims 1 to 4, wherein
the elastic member (325) includes a helical spring (325) located at an outer peripheral surface of the guide tube (322),
the suction nose (32) includes a suction nose spring guide (324) located at the outer surface of a distal end of the guide tube (322) to guide an inner peripheral surface of the helical spring, and
the suction pipe (38) includes
a suction pipe spring guide (315) located at an outer surface of the distal end of the suction pipe (38) to guide the inner peripheral surface of the helical spring (325), and
a ring (314) located at a basal end of the suction pipe spring guide (315) and holding an end of the helical spring (325).

6. The cleaning apparatus according to any one of claims 1 to 5, wherein
the suction nose (32) is extendable to prevent the distal end of the lance (34) from protruding outward from the suction port (33).

7. The cleaning apparatus according to any one of claims 1 to 6, wherein
the suction nose (32) is extendable to allow the distal end of the lance (34) to protrude outward from the suction port (33).

8. The cleaning apparatus according to any one of claims 1 to 7, further comprising:
a suction channel (21) connecting the suction pipe (38) to the exhauster (25).

9. The cleaning apparatus according to any one of claims 1 to 8, wherein
the suction channel (21) is conductive and grounded.

10. The cleaning apparatus according to any one of claims 1 to 9, wherein
the suction channel (21) includes a flexible duct hose.

11. The cleaning apparatus according to any one of claims 1 to 10, further comprising:
a master cylinder (352) supporting the suction channel (21); and
an adapter (351) supporting the suction pipe (38) and the lance (34), the adapter (351) being engageable with the master cylinder (352).

12. The cleaning apparatus according to any one of claims 1 to 11, wherein the master cylinder (352) includes
a main protrusion (3521) connecting to the suction channel (21), and
a sub-protrusion (3524) connecting to the air channel (3515, 3527), and the adapter (351) includes
a main recess (3511) engagingly receiving the main protrusion (3521) and connecting to the suction pipe (38), and
a sub-recess (3513) engagingly receiving the sub-protrusion (3524) and connecting to the lance (34).

13. The cleaning apparatus according to any one of claims 1 to 12, further comprising:
a sealing device (26) including
a sealer (263),
a support plate (262) supporting the sealer (263), and
a cylinder (261) movable between a position at which the support plate (262) is in close contact with a target (17) and a position at which the support plate (262) is spaced from the target (17).

14. A method for cleaning a target, comprising:
placing a suction port (33) in close contact with a cleaning spot (18) of a target (17);
sucking through the suction port (33);
inserting a lance (34) into the cleaning spot (18);
jetting compressed air from the lance (34);
stopping jetting of compressed air from the lance (34);
stopping sucking through the suction port (33); and
moving the suction port (33) away from the cleaning spot (18).

15. The method for cleaning a target according to claim 14, wherein
stopping jetting of compressed air from the lance (34) is performed after jetting compressed air from the lance (34), and
moving the suction port (33) away from the cleaning spot (18) is performed after stopping jetting of compressed air from the lance (34).
